(19)

Europäisches
Patentamt
European
Patent Office
Office européen
des brevets

(11) **EP 4 664 357 A1**

(12) **EUROPEAN PATENT APPLICATION**

(43) Date of publication:
**17.12.2025 Bulletin 2025/51**

(21) Application number: **25180432.4**

(22) Date of filing: **03.06.2025**

(51) International Patent Classification (IPC):
***G06N 3/0455*** (2023.01) ***G06N 3/047*** (2023.01)

(52) Cooperative Patent Classification (CPC):
**G06N 3/0455; G06N 3/047**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **12.06.2024 US 202418741555**

(71) Applicant: **Nokia Solutions and Networks Oy
02610 Espoo (FI)**

(72) Inventors:
• **TRABELSI, Mohamed
North Plainfield (NJ) (US)**
• **AKYAMAC, Ahmet
Bridgewater (NJ) (US)**

(74) Representative: **Nokia EPO representatives
Nokia Technologies Oy
Karakaari 7
02610 Espoo (FI)**

(54) **LEARNING FROM IMPERFECT DATA FOR ANOMALY DETECTION**

(57) Apparatus and method of training Machine Learning (ML) models. In an embodiment, the apparatus performs initial training of an anomaly detection model based on training samples of a training dataset over multiple epochs, where the anomaly detection model comprises a variational autoencoder (VAE). For each training sample during an epoch, the initial training comprises inputting an original data sequence of the training sample into the VAE encoder to output a multivariant distribution in latent space, sampling the multivariant distribution to generate multiple latent vectors, inputting the latent vectors into the VAE decoder to output reconstructed data sequences, and computing an estimated sample weight for the training sample. The apparatus identifies, after multiple epochs, corrupted samples from the training dataset based on the estimated sample weights, removes the corrupted samples to generate a filtered training dataset, and performs final training of the anomaly detection model based on the filtered training dataset.

EP 4 664 357 A1

## Description

### Technical Field

This disclosure is related to the field of data science, and more particularly, to training machine learning models to detect anomalies.

### Background

Today, diverse sets of data are collected from a variety of sources. For example, service delivery systems that provide services such as mobile telecommunication services, software systems, such as social media platforms, e-commerce websites, search engines, and cloud systems, and/or other types of systems generate logs or other data that describe their operation (e.g., runtime information). Logs, for example, may be generated as a part of routine operations (for example, as records of actions that have taken place, status flags, keep-alive messages, etc.), as part of scheduled or ad-hoc diagnostics, when problems, issues, or outages are encountered, etc. The logs typically comprise multiple lines of alphanumeric data/information, and can be voluminous, often scaling to multiple millions of lines or more of distinct log messages. Logs can be crucial sources of information, helping in the understanding and prediction of key actionable events, identifying key problem areas, finding potential root cause/solutions to service problems, taking automated actions for problem resolutions, etc. However, logs and/or other voluminous data are difficult to process or consume in a meaningful way.

### Summary

Described herein are an enhanced system and associated method of anomaly detection for datasets, such as logs or log files. As an overview, a system as described herein trains an anomaly detection model based on a training dataset of training samples, which may include imperfect data referred to generally as corrupted samples. During initial training, the sample weights are computed or estimated for the training samples during multiple epochs of training, and the sample weights are used to identify corrupted samples within the training dataset. Corrupted samples are removed from the training dataset, and final training is performed on the anomaly detection model using the training dataset with the corrupted samples removed. One technical benefit is an accurate anomaly detection model may be trained based on a training dataset that exclusively comprises "normal" training samples.

In an embodiment, an apparatus comprises at least one processor, and at least one memory storing instructions that, when executed by the at least one processor, cause the apparatus at least to perform initial training of an anomaly detection model based on training samples of a training dataset over multiple epochs, where the anomaly detection model comprises a variational autoencoder. For each training sample of the training samples during an epoch, the initial training comprises inputting an original data sequence corresponding with the training sample into an encoder of the variational autoencoder to output a multivariant distribution in latent space, sampling the multivariant distribution to generate multiple latent vectors, inputting the latent vectors into a decoder of the variational autoencoder to output reconstructed data sequences, and computing an estimated sample weight for the training sample representing an accuracy of the decoder reconstructing the original data sequence from the latent vectors based on the reconstructed data sequences. The apparatus further performs identifying, after the multiple epochs, one or more corrupted samples from the training dataset based on estimated sample weights computed for the training samples, removing the one or more corrupted samples from the training dataset to generate a filtered training dataset, and performing final training of the anomaly detection model based on the training samples of the filtered training dataset.

In an embodiment, a method comprises performing initial training of an anomaly detection model based on training samples of a training dataset over multiple epochs, where the anomaly detection model comprises a variational autoencoder. For each training sample of the training samples during an epoch, the initial training comprises inputting an original data sequence corresponding with the training sample into an encoder of the variational autoencoder to output a multivariant distribution in latent space, sampling the multivariant distribution to generate multiple latent vectors, inputting the latent vectors into a decoder of the variational autoencoder to output reconstructed data sequences, and computing an estimated sample weight for the training sample representing an accuracy of the decoder reconstructing the original data sequence from the latent vectors based on the reconstructed data sequences. The method further comprises identifying, after the multiple epochs, one or more corrupted samples from the training dataset based on estimated sample weights computed for the training samples, removing the one or more corrupted samples from the training dataset to generate a filtered training dataset, and performing final training of the anomaly detection model based on the training samples of the filtered training dataset.

In an embodiment, an apparatus comprises means for performing initial training of an anomaly detection model based on training samples of a training dataset over multiple epochs, where the anomaly detection model comprises a variational autoencoder. For each training sample of the training samples during an epoch, the initial training comprises inputting an original data sequence corresponding with the training sample into an encoder of the variational autoencoder to output a multivariant distribution in latent space, sampling the multivariant distribution to generate multiple latent vectors, inputting the latent vectors into a decoder of the variational autoencoder to output reconstructed data sequences, and computing an estimated sample weight for the training sample representing an accuracy of the decoder reconstructing the original data sequence from the latent vectors based on the reconstructed data sequences. The apparatus further comprises means for identifying, after the multiple epochs, one or more corrupted samples from the training dataset based on estimated sample weights computed for the training samples, means for removing the one or more corrupted samples from the training dataset to generate a filtered training dataset, and means for performing final training of the anomaly detection model based on the training samples of the filtered training dataset.

Other embodiments may include computer readable media, other systems, or other methods as described below.

The above summary provides a basic understanding of some aspects of the specification. This summary is not an extensive overview of the specification. It is intended to neither identify key or critical elements of the specification nor delineate any scope of the particular embodiments of the specification, or any scope of the claims. Its sole purpose is to present some concepts of the specification in a simplified form as a prelude to the more detailed description that is presented later.

**Description of the Drawings**

Some embodiments of the invention are now described, by way of example only, and with reference to the accompanying drawings. The same reference number represents the same element or the same type of element on all drawings.

FIG. 1 is a block diagram illustrating a system of anomaly detection in an illustrative embodiment.

FIG. 2A is a block diagram of a log file in an illustrative embodiment.

FIG. 2B illustrates a log file in an illustrative embodiment.

FIG. 3 is a block diagram of an anomaly detection system in an illustrative embodiment.

FIG. 4 is a schematic diagram of functional operations of anomaly detection system in an illustrative embodiment.

FIG. 5 is a diagram illustrating a training process in an illustrative embodiment.

FIG. 6 illustrates a training sample in an illustrative embodiment.

FIG. 7 illustrates an anomaly detection model in an illustrative embodiment.

FIGS. 8A-8G are flow charts illustrating a method of training an anomaly detection model in an illustrative embodiment.

FIG. 9 is a diagram illustrating sequence augmentation in an illustrative embodiment.

FIG. 10 is a diagram illustrating an operation of an encoder in an illustrative embodiment.

FIG. 11 is a diagram illustrating sampling of the output of an encoder in an illustrative embodiment.

FIG. 12 is a diagram illustrating operation of a decoder in an illustrative embodiment.

FIGS. 13A-13B are diagrams illustrating a training dataset in an illustrative embodiment.

FIG. 14 is a diagram illustrating a determination of ranking distributions in an illustrative embodiment.

FIG. 15 illustrates training with sample weight estimation in an illustrative embodiment.

FIG. 16 is a diagram illustrating validation through human feedback in an illustrative embodiment.

FIG. 17 is a graph illustrating ranking distributions of a training sample in an illustrative embodiment.

**Description of Embodiments**

The figures and the following description illustrate specific exemplary embodiments. It will thus be appreciated that those skilled in the art will be able to devise various arrangements that, although not explicitly described or shown herein, embody the principles of the embodiments and are included within the scope of the embodiments. Furthermore, any examples described herein are intended to aid in understanding the principles of the embodiments, and are to be construed as being without limitation to such specifically recited examples and conditions. As a result, the inventive concept(s) is not limited to the specific embodiments or examples described below, but by the claims and their equivalents.

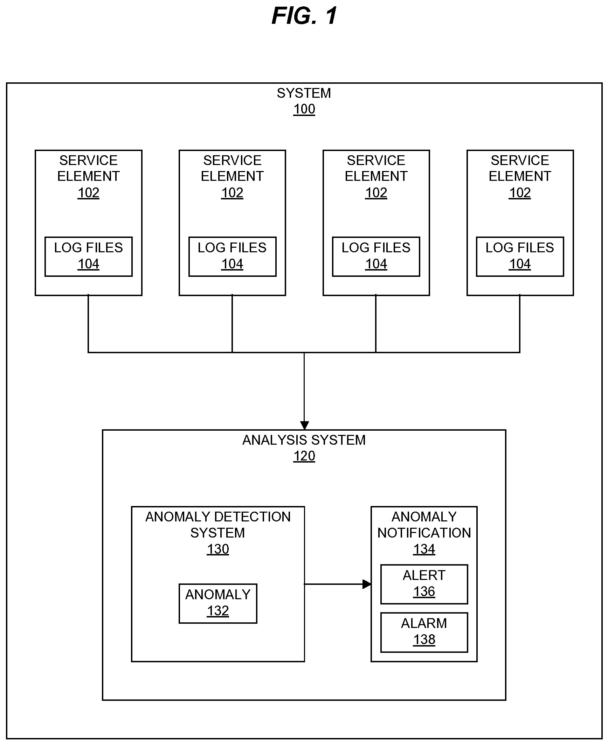

FIG. 1 is a block diagram illustrating a system 100 of anomaly detection in an illustrative embodiment. System 100 may provide one or more services through hardware elements/platforms, software applications, cloud-based applications, etc., which are generally referred to as service elements 102 (or log generating elements). A service element 102 is a data processing element configured to perform actions, operations, activities, services, etc., and generate log files 104, runtime information, and/or other data. For example, a service element 102 may comprise an apparatus, device, equipment, server, client, network element, processing element, hardware element, software module, application, program, etc. A log file 104 comprises one or more logs or log lines containing information about performance, usage patterns, events, activities, operations, transactions, and/or other information. It may be assumed in FIG. 1 that one or more of service elements 102 are diverse or heterogeneous elements that generate heterogeneous data with variability of data types and/or formats, such as within the log files 104.

System 100 further includes an analysis system 120 (also referred to as a log analysis system), which is a system, apparatus, application, means, etc., configured to perform analysis, reporting, etc., on a dataset, such as log files 104. Analysis system 120 is configured to collect log files 104 and/or other data from one or more service elements 102 within system 100 or a centralized server (not shown), and/or other service elements outside of system 100. Analysis system 120 is configured to process or analyze the data to extract or derive inferences from the data. The log data of log files 104, for example, which may originate from diverse systems and/or applications, represents valuable information capable of offering insights into system efficiency, user interactions, possible security risks, etc. Nonetheless, given the extensive quantity and intricate nature of log data, recognizing irregular patterns that might signify noteworthy occurrences, such as system malfunctions or security infringements, presents a complex challenge.

Thus, analysis system 120 may implement an anomaly detection system 130 configured to detect anomalous data, patterns, executions, operations, etc. (referred to generally as anomalies 132), in a dataset such as log files 104. Anomaly detection system 130 may include one or more Artificial Intelligence (AI) or Machine Learning (ML) systems trained to detect anomalies 132 in data, such as log files 104. Anomaly detection system 130 is configured to provide or report anomaly notifications 134, such as alerts 136, alarms 138, etc., in response to detection of anomalies 132. For example, anomaly detection system 130 may generate an alert 136 or an alarm 138 if/when anomalous data is detected in a log file 104. One technical benefit is the anomaly detection system 130 may analyze or monitor (e.g., automatically) a large volume of data (e.g., log files 104) in real-time or near real-time to detect anomalous data. Systems, such as system 100, may be expected to be continuously functional/operational and accessible, and any disruption in the availability may result in substantial financial losses. Log files 104, for example, may be one or the only available data source for troubleshooting, and are valuable and fundamental resources for detecting anomalies 132 in the system 100. Real-time monitoring of log data from diverse systems therefore aids in ensuring system stability. Further, due to the voluminous nature of log data that is generated, it is not feasible for human review of the log data in an accurate and efficient manner, necessitating the application of an automated or computerized system, such as analysis system 120.

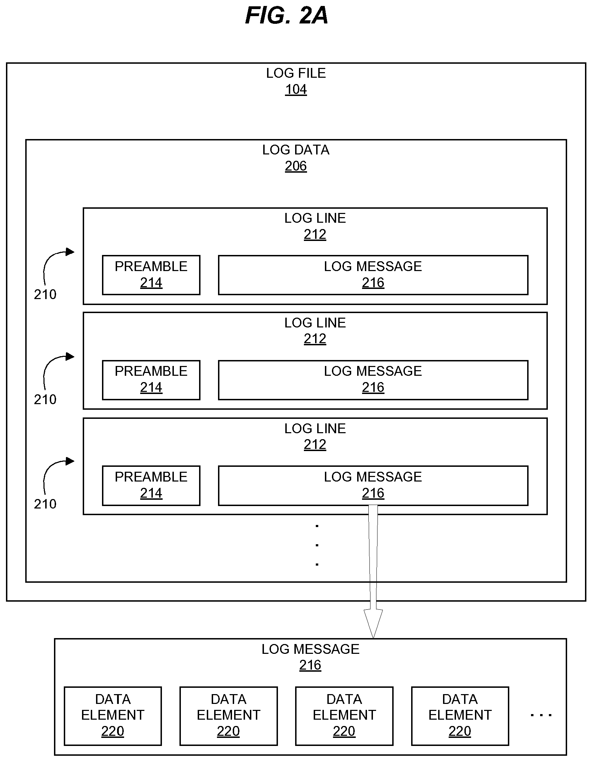

FIG. 2A is a block diagram of a log file 104 in an illustrative embodiment. Log files 104 are an example of data that may be analyzed by analysis system 120. In this embodiment, log file 104 includes log data 206 comprising one or more log lines 212 of alphanumeric data. A log line 212 may have a format of a preamble 214 and a log message 216. Preamble 214 includes metadata about the log message 216, such as a timestamp that indicates when the log message 216 was created, information indicating a system or subsystem that generated the log message 216, etc. Log message 216 is a dataset comprising information regarding or describing an event, activity, operation, transaction, etc., such as regarding a service. As shown in FIG. 2A, a log message 216 may include one or more data elements 220, which may comprise integers, floating points, and/or other numeric data, strings, characters, arrays, etc. The data elements 220 may be unstructured within a log message 216, may be separated in the log message 216 via a delimiter, such as a comma, a semicolon, etc. A log line 212 or a log message 216 of a log line 212 may be referred to generally as a data log or a log 210. Although one format is shown in FIG. 2A, other formats for a log file 104 are considered herein.

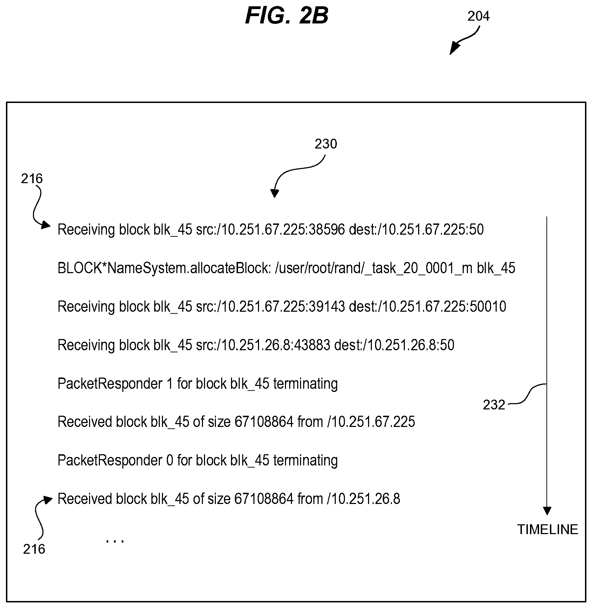

FIG. 2B illustrates a log file 204 in an illustrative embodiment. Log file 204 is provided as an example of a log file 104 disclosed above. Log file 204 includes a sequence 230 of log messages 216 over a timeline 232. Each log message 216 comprises alphanumeric data regarding or describing an event, activity, operation, transaction, etc.

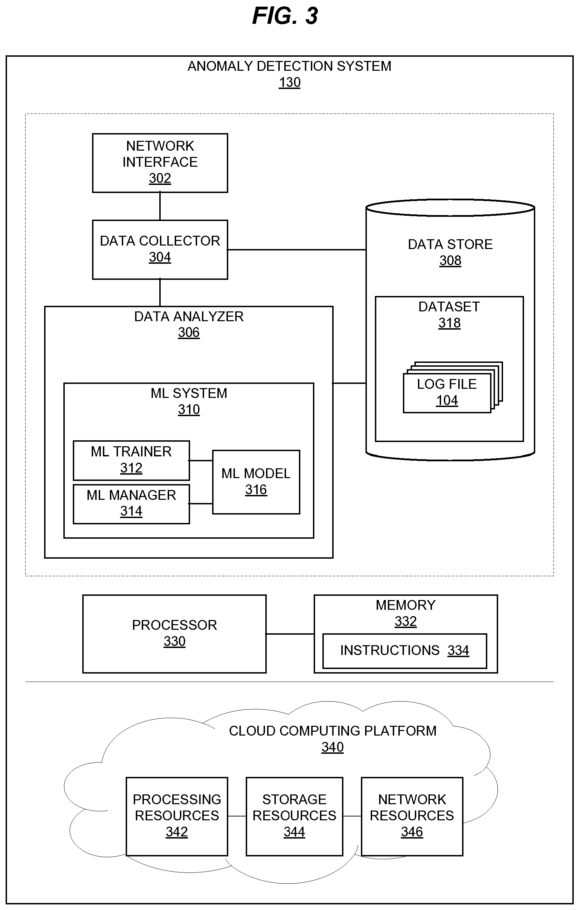

FIG. 3 is a block diagram of an anomaly detection system 130 in an illustrative embodiment. In this embodiment, anomaly detection system 130 includes the following subsystems: a network interface component 302, a data collector 304, a data analyzer 306, and a data store 308. Network interface component 302 is a hardware component or circuitry that exchanges messages, packets, data, etc., with other elements over a network connection. Network interface component 302 may use a variety of protocols, Application Programming Interfaces (APIs), etc., for communication. Data collector 304 (also referred to as a log collector) comprises circuitry, logic, hardware, means, etc., configured to collect data for analysis, such as log files 104 generated by service elements 102. Data analyzer 306 (also referred to as a log analyzer) comprises circuitry, logic, hardware, means, etc., configured to analyze, examine, or monitor data for anomalies 132, such as in log files 104. Example operations of data analyzer 306 are described in further detail below.

In an embodiment, data analyzer 306 may implement a machine learning (ML) system 310 for analyzing data, such as log files 104. An ML system 310 may comprise circuitry, logic, hardware, software, means, etc., configured to use machine learning techniques to perform functions described for data analyzer 306. In an embodiment, one or more ML models 316 are trained for ML system 310. In general, an ML model 316 is a program or algorithm that learns from training samples to detect anomalies in a dataset 318, such as log files 104. ML system 310 may further include an ML trainer 312 and an ML manager 314. ML trainer 312 may comprise circuitry, logic, hardware, means, etc., configured to train and/or re-train one or more ML models. ML manager 314 may comprise circuitry, logic, hardware, means, etc., configured to manage one or more ML models 316 as trained. For example, ML manager 314 may be configured to input data into ML model 316 during testing or after deployment, and receive output from the ML model 316, along with other functions.

Data store 308 comprises a repository configured to store data or a dataset 318, such as log files 104 collected by data collector 304, training data for ML model 316, and/or other data.

One or more of the subsystems of anomaly detection system 130 may be implemented on a hardware platform comprised of analog and/or digital circuitry. One or more of the subsystems of anomaly detection system 130 may be implemented on a processor 330 that executes instructions 334 stored in memory 332. A processor 330 comprises an integrated hardware circuit configured to execute instructions 334 to provide the functions of anomaly detection system 130. Processor 330 may comprise a set of one or more processors or may comprise a multi-processor core, depending on the particular implementation. Memory 332 is a non-transitory computer readable medium for data, instructions, applications, etc., and is accessible by processor 330. Memory 332 is a hardware storage device capable of storing information on a temporary basis and/or a permanent basis. Memory 332 may comprise a random-access memory, or any other volatile or non-volatile storage device.

One or more of the subsystems of anomaly detection system 130 may be implemented on cloud computing platform 340 (e.g., Amazon Web Services (AWS)) or another type of processing platform. Cloud resources may be provisioned on cloud computing platform 340, such as processing resources 342 (e.g., physical or hardware processors, a server, a virtual server or virtual machine (VM), a virtual central processing unit (vCPU), etc.), storage resources 344 (e.g., physical or hardware storage, virtual storage, etc.), and/or networking resources 346, although other resources are considered herein. Anomaly detection system 130 may be built upon the provisioned resources with instructions, programming, code, etc. For example, network interface component 302 may be provisioned on networking resources 346, data collector 304 and/or data analyzer 306 may be provisioned on processing resources 342, and data store 308 may be provisioned on storage resources 344.

Anomaly detection system 130 may include various other components not specifically illustrated in FIG. 3.

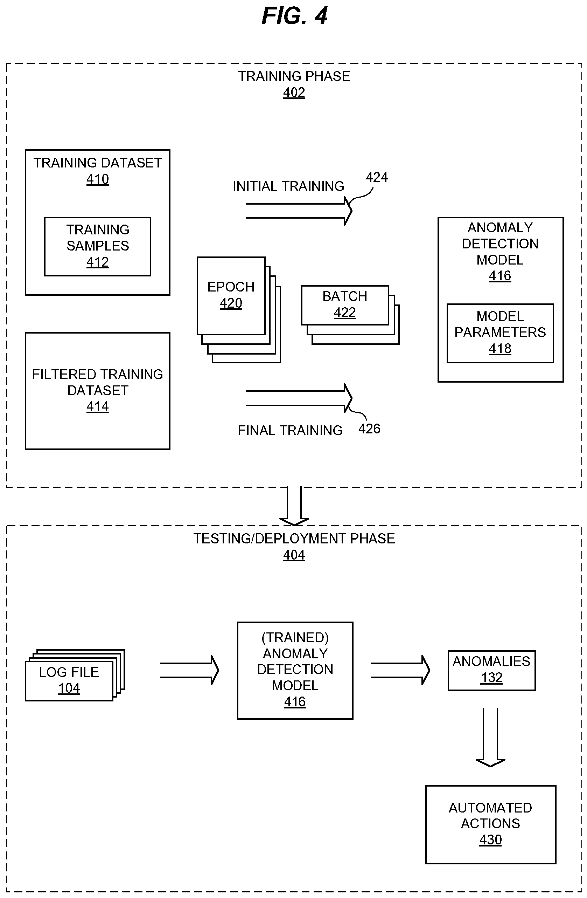

FIG. 4 is a schematic diagram of functional operations of anomaly detection system 130 in an illustrative embodiment. Anomaly detection system 130 may operate in a training phase 402, and a testing or deployment phase 404. In the training phase 402, ML trainer 312, for example, operates to train an anomaly detection model 416, which is one example of an ML model 316 as illustrated in FIG. 3. ML trainer 312 performs initial training 424 of the anomaly detection model 416 using training samples 412 of a training dataset 410, which may be referred to as an initial training dataset. During initial training 424, ML trainer 312 may train the anomaly detection model 416 over a plurality of epochs 420, which is a single iteration of training on an entire training dataset. During an epoch 420, the anomaly detection model 416 sequentially processes the training samples 412 of the training dataset 410, calculates loss or otherwise quantifies the predicted outputs, and updates model parameters 418 (e.g.., weights) accordingly. The number of epochs 420 determines how many times the anomaly detection model 416 iterates through the entire training dataset 410, allowing it to learn and refine the model parameters 418 over multiple passes. Anomaly detection model 416 is trained, within an epoch 420, in batches 422 of training samples 412 from the training dataset 410. A batch 422 is a number of training samples to work through before updating model parameters 418.

As will be described in further detail below, one or more training samples 412 of the training dataset 410 may be considered corrupted. During initial training 424, processes are performed to identify corrupted samples from the training dataset 410. These corrupted samples are removed from the training dataset 410 to generate a filtered training dataset 414 comprising a subset of the training samples 412. ML trainer 312 performs final training 426 of the anomaly detection model 416 using the filtered training dataset 414. The term "final" is meant to indicate training at the end of the training phase 402 (i.e., after initial training 424), and is not meant to indicate that all training has concluded for anomaly detection model 416, as re-training may be performed as desired. During final training 426, ML trainer 312 may train the anomaly detection model 416 over a plurality of epochs 420, in batches 422 of training samples 412 from the filtered training dataset 414, etc., as described above for initial training 424.

In the testing/deployment phase 404, ML manager 314, for example, may use the trained anomaly detection model 416 to detect anomalies 132 in data, such as log files 104. For example, one or more log files 104 may be fed or input into anomaly detection model 416 (as trained), and anomaly detection model 416 outputs an indication of an anomaly 132 when detected in the log files 104. ML manager 314, or another system, may then perform one or more automated actions 430 in response to detection of an anomaly 132, such as for mitigation. For example, ML manager 314 may isolate a service element 102, may modify parameters of a service element 102, and/or perform other actions.

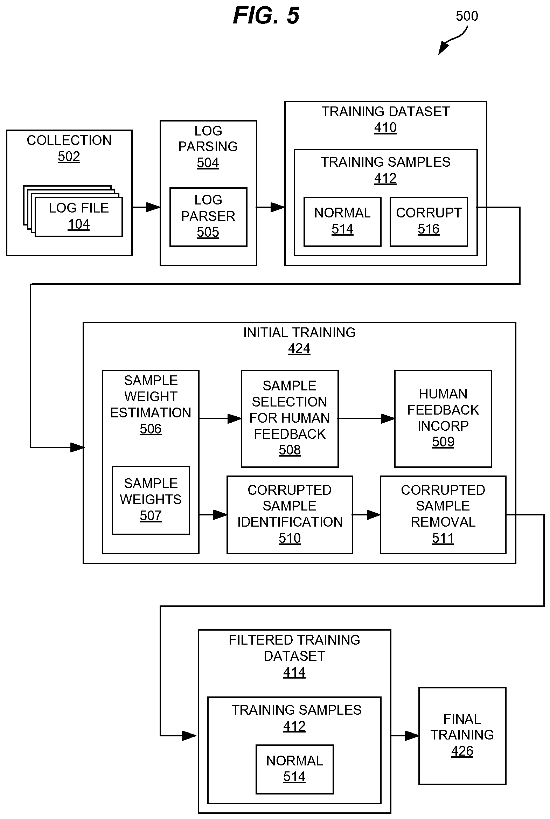

FIG. 5 is a diagram illustrating a training process 500 in an illustrative embodiment. Training process 500 may be implemented in the training phase 402 to train anomaly detection model 416. In general, a collection 502 of log files 104 (e.g., raw log files) may be obtained for training. Although log files 104 are provided as an example, other types of data may be collected or obtained that includes a sequence of data or sequential data, which is referred to generally herein as a data sequence. One step of the training process 500 may comprise log parsing 504, where a log parser 505 is used to parse the log files 104 and obtain the training samples 412 (i.e., the data sequences) of a training dataset 410. Log parsing 504, in general, is a process that converts structured or unstructured log files 104 into a common format.

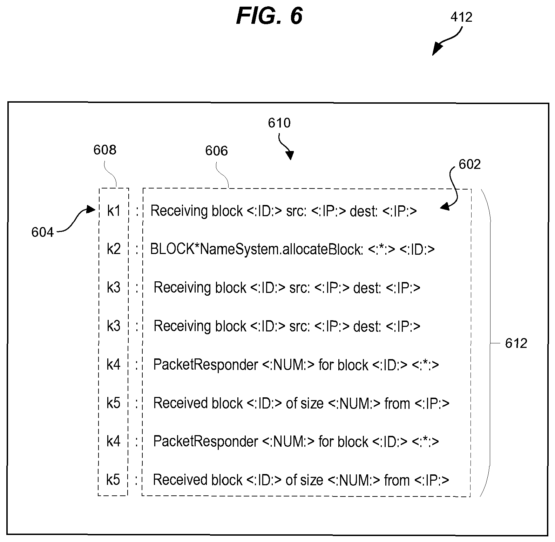

FIG. 6 illustrates a training sample 412 in an illustrative embodiment. A goal of anomaly detection model 416 is to determine whether a sequence or pattern of data (e.g., log messages 216) is normal or anomalous. To facilitate this task, log parser 505 may extract log message templates 602 from the log messages 216 (see also, FIG. 2B), and assign log keys 604 to the log message templates 602. ML trainer 312, or another system, may generate the training samples 412 for the training dataset 410 based on the log message templates 602 and/or log keys 604. A training sample 412 may therefore comprise a template sequence 606 of the log message templates 602 and/or a log key sequence 608 of the log keys 604. Although a training sample 412 may comprise a template sequence 606, a log key sequence 608, or another type of log sequence 612 as in FIG. 6, a training sample 412, in general, comprises a data sequence 610.

In FIG. 5, ML trainer 312 performs initial training 424 of the anomaly detection model 416 using the training samples 412 of the training dataset 410. Conventional training methods operated based on the assumption of "normal" training data. In real-case scenarios, the training data may be imperfect, as corrupted samples may exist as a result of poorly curated datasets, malicious intent, etc. Thus, it may be assumed that training dataset 410 contains normal samples 514, and may also contain corrupted samples 516. The anomaly detection model 416 should be trained (i.e., exclusively) on the normal samples 514, so training process 500 identifies the corrupted samples 516 in the training dataset 410 during initial training 424 to avoid learning malicious or spurious patterns. Relying on experts for curating and cleaning the training dataset 410 before starting the training is time-consuming and prone to errors. Therefore, initial training 424 may include a step of sample weight estimation 506 for identifying corrupted samples 516 and/or potentially corrupted samples in the training dataset 410. In sample weight estimation 506, a value is computed or estimated for each training sample 412 in the training dataset 410, which is referred to as a sample weight 507, that reflects the quality of the training sample 412 (i.e., reflects how well the anomaly detection model 416 reproduces the training sample 412).

The training process 500 may further include a step of sample selection 508 for selecting or identifying one or more training samples 412 for human feedback based on the sample weights 507 estimated during the prior step. In sample selection 508, for example, ML trainer 312 may identify potentially corrupted samples in the training dataset 410 based on the sample weights 507. ML trainer 312 may not be able to definitively label potentially corrupted samples as "corrupted" or "normal" based on the sample weights 507, so ML trainer 312 may opt for human feedback on those potentially corrupted samples. The training process 500 may further include a step of human feedback incorporation 509 for incorporating the human feedback into anomaly detection model 416, which helps to improve or guarantee the model's reliability.

The training process 500 may further include a step of corrupted sample identification 510 for identifying corrupted samples 516 in the training dataset 410 based on the sample weights 507. ML trainer 312 may be able to identify certain training samples 412 as corrupted based on the sample weights 507. The training process 500 may further include a step of corrupted sample removal 511 where corrupted samples 516 are removed from the training dataset 410 to generate a filtered training dataset 414. The corrupted samples 516 may be identified based on the sample weights 507 and/or the human feedback (e.g., the human feedback specifies that certain training samples 412 are corrupted samples 516).

The training process 500 may further include final training 426 using the filtered training dataset 414 that contains normal samples 514 with the corrupted samples 516 removed. One technical benefit is the training process 500 results in a reliable model that may be used for future predictions on unseen log files 104 or other datasets.

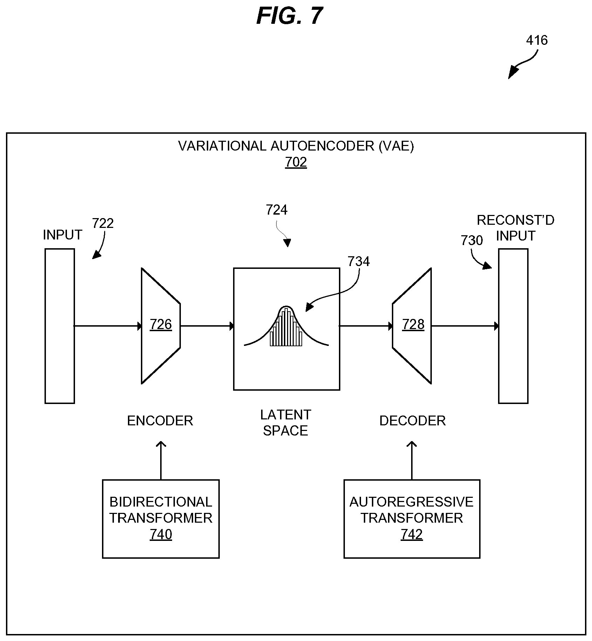

FIG. 7 illustrates an anomaly detection model 416 in an illustrative embodiment. In an embodiment, anomaly detection model 416 may comprise a variational autoencoder (VAE) 702. VAE 702 may comprise an input layer 722, one or more hidden layers that comprise an encoder 726 and a decoder 728, and an output layer 730. The encoder 726 connects to the decoder 728 through a probabilistic latent space 724. Based on input data provided at the input layer 722, the encoder 726 outputs parameters that define a probability distribution for each dimension of the latent space 724 (i.e., a multivariate distribution 734). For each input, the encoder 726 produces a mean and a variance as parameters for each dimension of the latent space 724. The mean and variance are used to define the multivariate (Gaussian) distribution 734. Decoder 728 reconstructs the input data by sampling the multivariate distribution 734, and provides the reconstructed input at output layer 730. In an embodiment, encoder 726 may be implemented as a bidirectional transformer 740, and may therefore be referred to as a bidirectional encoder. Decoder 728 may be implemented as an autoregressive transformer 742, and may therefore be referred to as an autoregressive decoder.

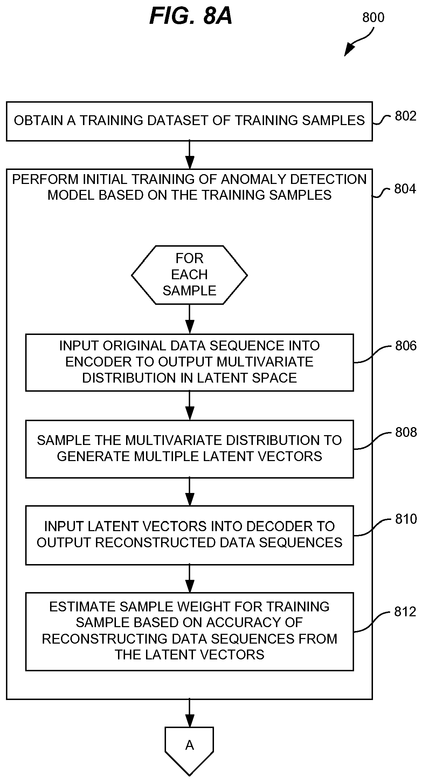

FIGS. 8A-8G are flow charts illustrating a method 800 of training an anomaly detection model 416 in an illustrative embodiment. The steps of method 800 will be described with reference to anomaly detection system 130 in FIG. 3, but those skilled in the art will appreciate that method 800 may be performed in other systems or devices. Also, the steps of the flow charts described herein are not all inclusive and may include other steps not shown, and the steps may be performed in an alternative order.

In FIG. 8A, ML trainer 312, for example, obtains a training dataset 410 comprising a plurality of training samples 412 (step 802). As described above, each training sample 412 of the training dataset 410 comprises a data sequence 610, such as a log sequence 612, a log key sequence 608, etc. ML trainer 312 then performs initial training 424 of the anomaly detection model 416 based on the training samples 412 of the training dataset 410 (step 804). More particularly, ML trainer 312 performs training with the training samples 412 over multiple epochs 420. Within an epoch 420, for example, ML trainer 312 may perform the following for each training sample 412. ML trainer 312 may input or feed an original data sequence corresponding with the training sample 412 into the encoder 726 of the VAE 702 to output a multivariant distribution 734 of latent variables or latent embeddings in latent space 724 (step 806). The original data sequence corresponding with the training sample 412 comprises the input data to the encoder 726. In an embodiment, the input data may comprise an actual data sequence 610 (e.g., log key sequence 608) from the training sample 412.

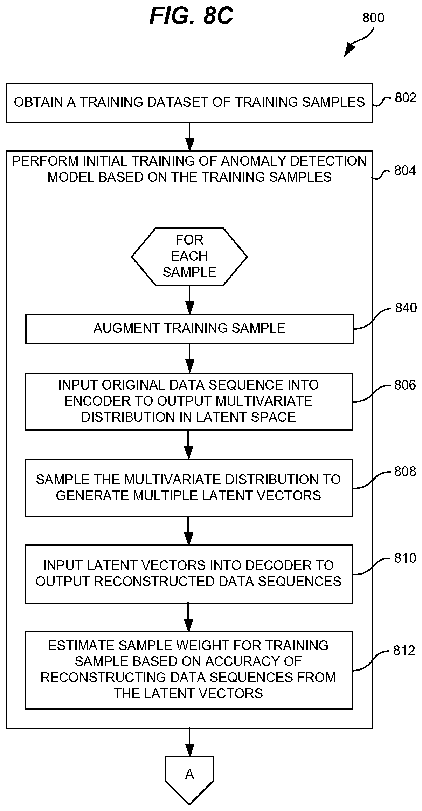

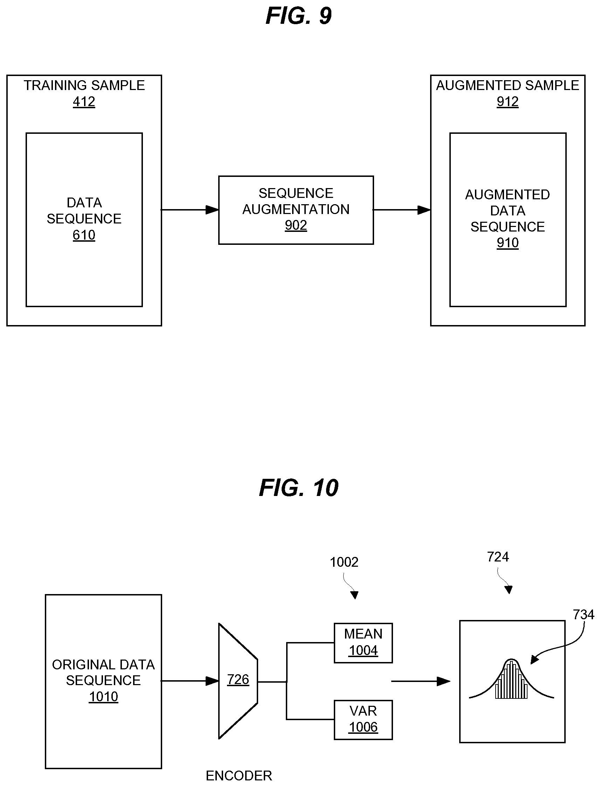

In another embodiment, the input data may comprise an augmented data sequence (e.g., augmented log key sequence) generated from the training sample 412. In FIG. 8C, ML trainer 312 may perform data or sequence augmentation to augment the training sample 412 (step 840). The sequence augmentation alters the data sequence 610 of the training sample 412 to generate an augmented data sequence. FIG. 9 is a diagram illustrating sequence augmentation 902 in an illustrative embodiment. Sequence augmentation 902 alters, modifies, or changes the data sequence 610 of a training sample 412 to generate an augmented sample 912 and/or an augmented data sequence 910. For example, a log sequence 612, log key sequence 608, etc., of a training sample 412 may be altered to generate an augmented log sequence, an augmented log key sequence, etc. Examples of sequence augmentation 902 may comprise randomly removing data from a data sequence 610, shuffling data within a data sequence 610, etc.

FIG. 10 is a diagram illustrating an operation of encoder 726 in an illustrative embodiment. The role of encoder 726 is to map input data (i.e., an original data sequence 1010) to parameters 1002 in the latent space 724. The parameters 1002 may comprise a mean 1004 ($\mu$), and a variance or standard deviation 1006 ($\sigma$). The mean 1004 and standard deviation 1006 are used to define the multivariate distribution 734 in the latent space 724.

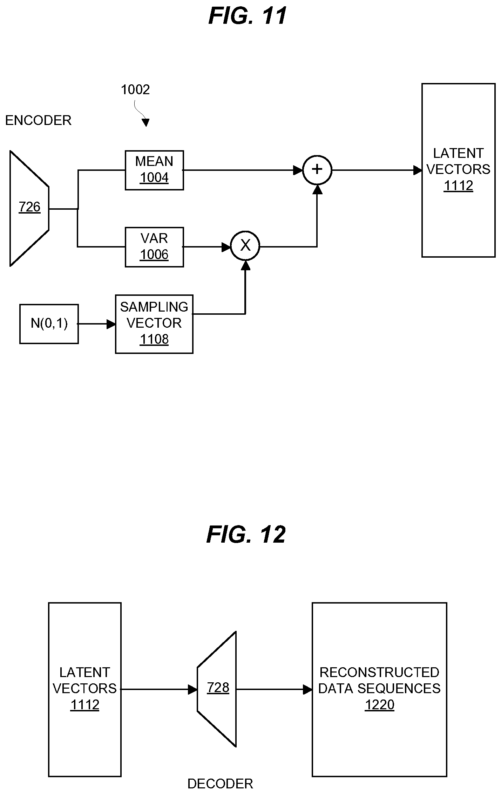

In FIG. 8A, decoder 728, for example, performs sampling of the multivariate distribution 734 to identify or generate multiple (sampled) latent vectors (step 808). FIG. 11 is a diagram illustrating sampling of the output of encoder 726 in an illustrative embodiment. Decoder 728 samples a standard normal distribution N(0,1) of the mean 1004 ($\mu$) and standard deviation 1006 output by encoder 726 as $z = \mu + \sigma \cdot \varepsilon$, where $\varepsilon$ is a sampling vector 1108 of random normal variables (i.e., standard Gaussian variables). The sampling vector 1108 is therefore used to compute or sample multiple latent vectors 1112 from the multivariate distribution 734.

In FIG. 8A, the latent vectors 1112 are input to decoder 728 of the VAE 702 to output reconstructed data sequences (step 810). FIG. 12 is a diagram illustrating operation of decoder 728 in an illustrative embodiment. The role of decoder 728 is to map a (encoded) latent vector 1112 in the latent space 724 to a reconstructed data sequence 1220. Decoder 728 therefore reconstructs an original data sequence 1010 from each of the latent vectors 1112 sampled in a prior step, to output the reconstructed data sequences 1220.

In FIG. 8A, ML trainer 312 estimates or computes a sample weight 507 (also referred to as an estimated sample weight) for the training sample 412 (step 812). The sample weight 507 indicates, reflects, or represents the accuracy of the decoder 728 reconstructing the original data sequence 1010 from the latent vectors 1112 based on the reconstructed data sequences 1220. In other words, the sample weight 507 indicates or reflects how accurate the decoder 728 was in mapping the latent vectors 1112 to the reconstructed data sequences 1220.

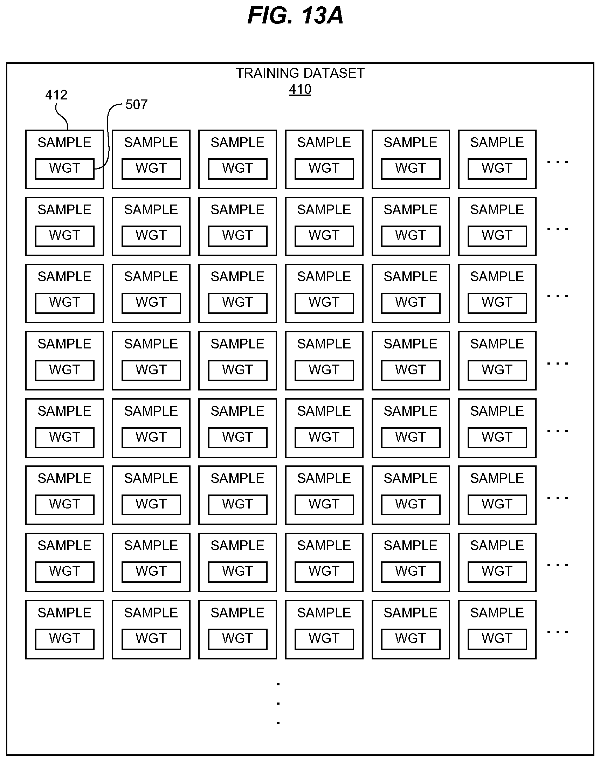

ML trainer 312 repeats this process in steps 806-812 for each training sample 412 in each epoch 420 of training to compute sample weights 507 for the training samples 412. FIG. 13A is a diagram illustrating the training dataset 410 in an illustrative embodiment. As described above, training dataset 410 include a plurality of training samples 412 (SAMPLE). Initial training 424 as described herein results in sample weights 507 (WGT) associated with the training samples 412.

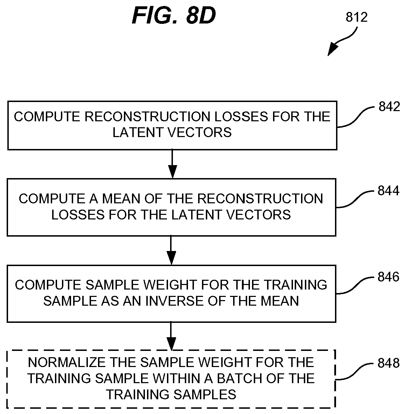

A process of computing a sample weight 507 for a training sample 412 is further described in FIG. 8D. In an embodiment, ML trainer 312 may compute reconstruction losses for the latent vectors 1112 (step 842). The reconstruction loss is a measure of how close the output (i.e., reconstructed data sequence 1220) of the decoder 728 is to the input to the encoder 726 (i.e., original data sequence 1010). ML trainer 312 may compute a mean of the reconstruction losses for the latent vectors 1112 (step 844), and compute the sample weight 507 for the training sample 412 as an inverse of the mean (step 846). ML trainer 312 may also normalize the sample weight 507 for the training sample 412 within a batch 422 of the training samples 412 (optional step 848). A process for computing sample weights 507 is described in further detail below.

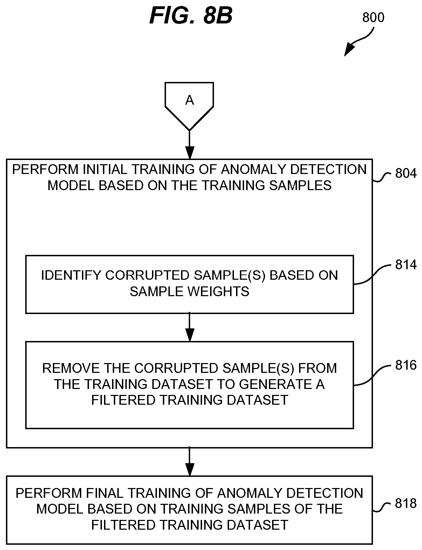

The sample weights 507 may then be used to identify corrupted samples 516 and/or potentially corrupted samples in the training dataset 410 after multiple epochs 420 of initial training 424. In FIG. 8B, ML trainer 312 may identify one or more corrupted samples 516 from the training dataset 410 based on the sample weights 507 computed or estimated for the training samples 412 (step 814), and remove or delete the corrupted sample(s) 516 from the training dataset 410 (step 816). Removal of the corrupted samples 516 results in the filtered training dataset 414. Generation of the filtered training dataset 414 may represent the end of the initial training 424. ML trainer 312 then performs final training 426 of the anomaly detection model 416 based on the training samples 412 of the filtered training dataset 414 (step 818). The remaining training samples 412 of the filtered training dataset 414 may be considered normal samples 514. One technical benefit is the training results in a reliable model that may be used for future predictions on unseen log files 104 or other datasets.

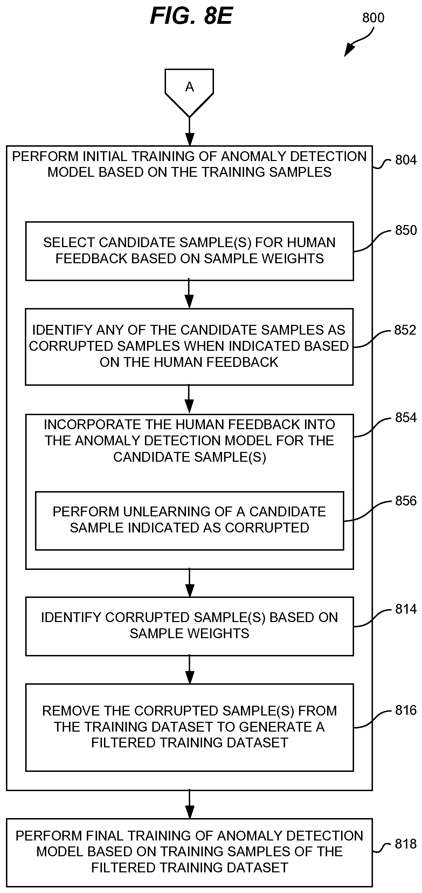

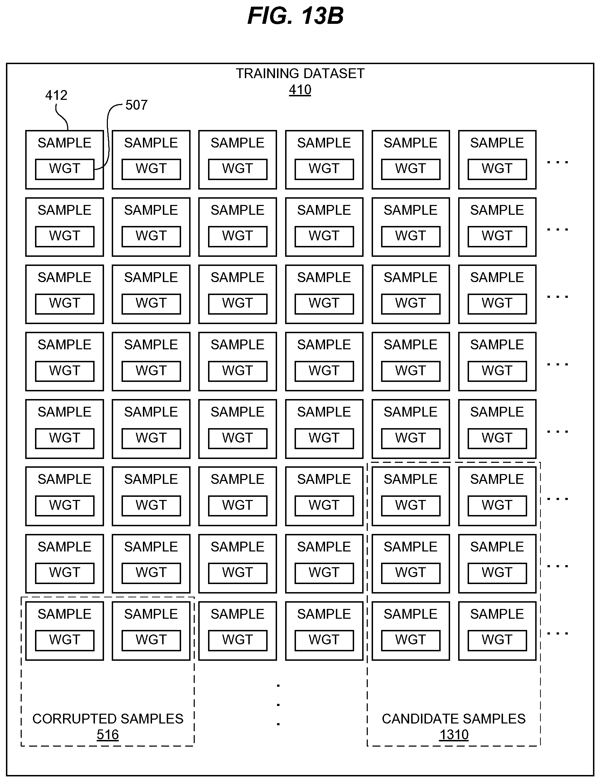

ML trainer 312 may be able to definitively or confidently determine whether a training sample 412 is a normal sample 514 or a corrupted sample 516 based on the sample weights 507. However, ML trainer 312 may not be able to confidently determine whether some training samples 412 are "normal" or "corrupted", and opt for assistance from a human. In FIG. 8E, ML trainer 312 may select one or more candidate samples for human feedback based on the sample weights 507 computed for the training samples 412 (step 850). FIG. 13B is a diagram illustrating the training dataset 410 in an illustrative embodiment. Based on the sample weights 507 estimated or computed during initial training 424, ML trainer 312 may identify one or more candidate samples 1310 that are potentially corrupted. Because ML trainer 312 may not be able to make a definitive determination whether or not a candidate sample 1310 is corrupted, human feedback is requested. ML trainer 312 may provide the candidate sample(s) 1310 to a human rater, a domain expert, etc., for feedback as to whether the candidate sample(s) 1310 is normal or corrupted. FIG. 13B also shows one or more corrupted samples 516 identifiable based on the sample weights 507 computed or estimated for the training samples 412 (see step 814).

In FIG. 8E, ML trainer 312 may identify any of the candidate samples 1310 as a corrupted sample 516 when indicated as corrupted based on the human feedback (step 852). Thus, the corrupted samples 516 are removed from the training dataset 410, as provided in step 816. ML trainer 312 may also incorporate the human feedback into the anomaly detection model 416 for the candidate sample(s) 1310 (step 854). For example, when a candidate sample 1310 is indicated as corrupted based on the human feedback, ML trainer 312 may perform unlearning of the candidate sample 1310 (step 856).

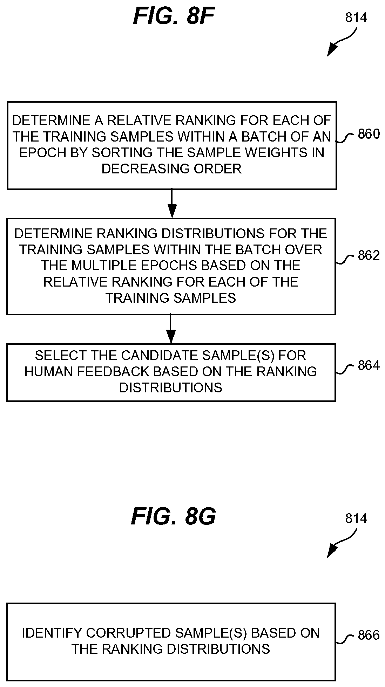

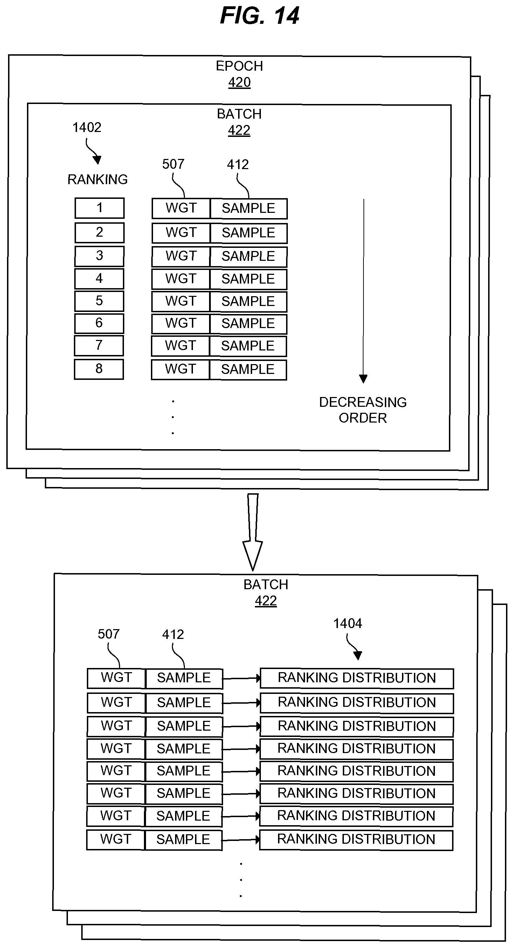

A process of identifying one or more corrupted samples 516 from the training dataset 410 is further described in FIG. 8F. In an embodiment, ML trainer 312 may determine a relative ranking for each of the training samples 412 within a batch 422 of an epoch 420 by sorting the sample weights 507 in decreasing order (step 860). ML trainer 312 may determine ranking distributions for the training samples 412 within the batch 422 based on the relative ranking determined for each of the training samples 412 over the multiple epochs 420 (step 862). ML trainer 312 may select the candidate sample(s) 1310 for human feedback based on the ranking distributions (step 864). FIG. 14 is a diagram illustrating a determination of ranking distributions in an illustrative embodiment. As described above, ML trainer 312 determines a relative ranking 1402 for each of the training samples 412 by sorting the sample weights 507 in decreasing order. For example, the first training sample 412 in the list has the largest sample weight 507 and the highest relative ranking 1402 of "1", the second training sample 412 in the list has the next largest sample weight 507 and the next highest relative ranking 1402 of "2", the third training sample 412 in the list has the next largest sample weight 507 and the next highest relative ranking 1402 of "3", etc. ML trainer 312 then determines ranking distributions 1404 for the training samples 412 within the batch 422 based on the relative rankings 1402 for each of the training samples 412. The ranking distributions 1404 may indicate whether a training sample is "normal", "corrupted", or "potentially corrupted". In FIG. 8G, for example, ML trainer 312 may identify one or more corrupted samples 516 based on the ranking distributions 1404 (step 866). In-batch ranking distributions 1404 are discussed in more detail below.

The following example may provide additional processes, systems, and methods in the context of model training and/or deployment. The processes, systems, and methods described in this example may be incorporated in embodiments described above as desired.

As above, ML trainer 312 may obtain a collection 502 of log files 104 (e.g., raw log files) for training, and parse the log files 104 using log parser 505 to obtain the training dataset 410 comprising a plurality of training samples 412 (see FIG. 5). Each training sample 412 comprises a template sequence 606 of the log message templates 602 and/or a log key sequence 608 of the log keys 604. A log sequence as discussed herein may be defined as an ordered sequence of log keys 604, denoted as $S_{1:T} = \{k_1, \ldots, k_t, \ldots k_T\}$, where each $k_t \in \kappa$ represents the log key 604 at the $t$-th position, and $\kappa$ is the set containing all log keys 604 extracted from the log messages 216. An objective of anomaly detection model 416 involves predicting whether a novel or unseen log sequence S is anomalous. This prediction is established using the training dataset 410, denoted as $D = \{S^i\}_{i=1}^N$. Anomaly detection model 416 should be trained exclusively on the normal samples 514 (i.e., normal log sequences) contained in the training dataset 410, but it is conceivable or assumed that the training dataset 410 also contains corrupted samples 516 (i.e., abnormal log sequences). Part of the training process 500 therefore comprises identifying and removing the corrupted samples 516 from the training dataset 410. In an embodiment, training with sample weight estimation 506 may be implemented to automatically identify the corrupted samples 516 in the training dataset 410.

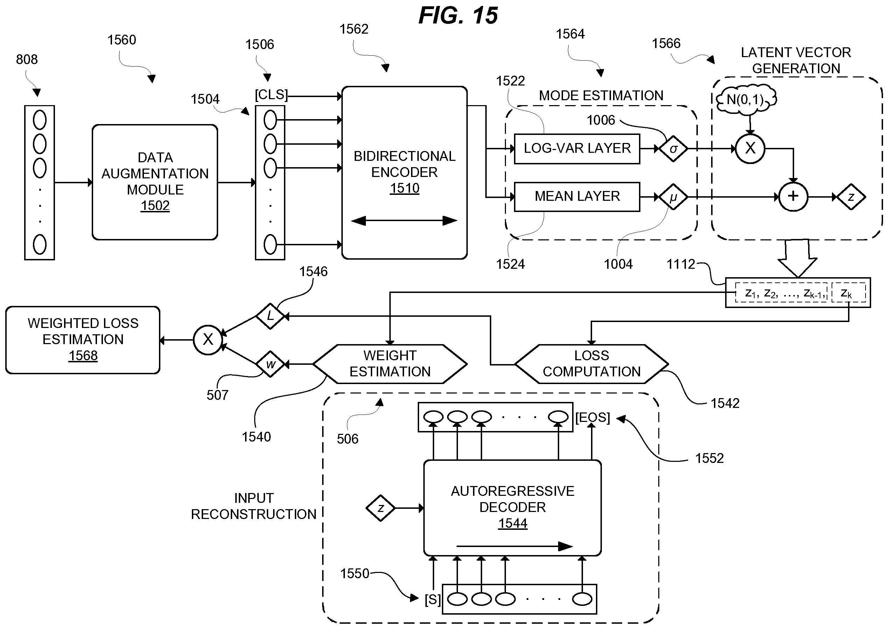

FIG. 15 illustrates training with sample weight estimation 506 in an illustrative embodiment. Training with sample weight estimation 506 comprises at least the following steps: data augmentation 1560, bidirectional encoding 1562, mode estimation 1564, latent vector generation 1566, and sample weight estimation 506.

For data augmentation 1560, an assumption is that patterns of normal log sequences are more frequent than patterns of corrupted log sequences. To encourage the model to capture the dominant patterns in the training dataset 410, anomaly detection model 416 includes a data augmentation module 1502 configured to ingest an original log key sequence 608 as input, and return an augmented log key sequence 1504 as output. One technical benefit is increasing the variability of the training dataset 410, which acts to delay learning of corrupted patterns, and focuses the effort of training on learning the most frequent patterns. Examples of data augmentation techniques include random removal of a log key(s) 604 from a log key sequence 608, shuffling of a log key sequence 608, etc. The data augmentation function implemented by a data augmentation module 1502 may be denoted by *DA,* and the resulting augmented log key sequence 1504 may be denoted by *S' = DA(S)*.

For bidirectional encoding 1562, a bidirectional encoder 1510 (which is an example of encoder 726 in FIG. 7) is trained to map a given pattern (i.e., an augmented log key sequence 1504 (S')) to a latent representation. One technical benefit is the bidirectional encoder 1510 is transformer-based, and comprises transformer layers that capture long-range dependencies better than other architectures, such as recurrent architectures. The bidirectional encoder 1510 is bidirectional in order to capture the contextual information from left-to-right and right-to-left directions. A Classify Token 1506 ([CLS]) is added to the beginning of the augmented log key sequence 1504 (S'), and the resulting sequence ([CLS] S') is fed to the bidirectional encoder 1510. The latent embedding of the augmented log key sequence 1504 (*S'*), denoted by *S''*, is computed using the hidden state of the [CLS] token 1506 from the last transformer block in bidirectional encoder 1510.

For mode estimation 1564, the VAE 702 is incorporated to model multiple modes of log data instead of forcing a single pattern of normal data. One technical benefit of capturing multiple modes of log key sequences 608 is to distinguish between the normal patterns and the corrupted patterns. VAE 702 models the relationship between a latent vector (*z*) and an observed variable x. The joint distribution of the generative model is denoted by $p(x,z) = p(x|z)p(z)$. The latent random variables, $p(z)$, may be assumed to be a Gaussian distribution, and the conditional $p(x|z)$ may be a non-linear mapping from z to x that is computed by a parametric function of *z*. However, using a non-linear mapping from *z* to *x* leads to an intractable inference of the posterior $p(z|x)$. Therefore, VAE 702 introduces a variational approximation $q(z|x)$ of the true posterior $p(z|x)$. The variational approximation $q(z|x)$ may be assumed to be a normal distribution $N(\mu, \sigma^2)$. Therefore, each pattern may be modeled by a normal distribution $N(\mu, \sigma^2)$, where the mean 1004 ($\mu$) and standard deviation 1006 ($\sigma$) are estimated using a mean layer 1524 and a log variance layer 1522, respectively, which may be given by:

$$\mu = LS'' + b_L$$

$$log \ \sigma \ = GS'' + b_G$$

Parameters $L, b_L, G, b_G$ are the parameters of the variational approximation *q*.

In a traditional VAE, only one latent vector is generated from the estimated normal distribution. For latent vector generation 1566 (also referred to as latent sample generation) as described herein, *K* latent vectors 1112 (or latent samples) are generated from the estimated normal distribution, denoted by $z_1, z_2, ... , z_K$, using the re-parametrization trick, where each latent vector 1112 is computed by $z_i = \mu + \sigma \cdot \varepsilon$, for $i = 1, 2, ..., K$, and $\varepsilon$ is a vector of standard Gaussian variables. Latent vectors $z_1, z_2, ... , z_{K-1}$ are used for sample weight estimation 506 and $z_K$ is used for the loss computation in computing the final weighted loss estimation 1568.

Weighted loss estimation 1568 comprises a sample weight estimation module 1540 and a loss computation module 1542. The main component of these two modules is an autoregressive decoder 1544 (which is an example of decoder 728 in FIG. 7). The autoregressive decoder 1544 ingests a latent vector 1112 (z) as input, and returns as output a probability distribution of log keys 604 in each time stamp of the augmented log key sequence 1504 (S'). In other words, an objective of the autoregressive decoder 1544 is to reconstruct the augmented log key sequence 1504 (S') from the latent vector 1112 (z). The autoregressive decoder 1544 is a transformer-based model that decomposes the latent vector 1112 (z) into a sequence of log keys 604. In a first step, autoregressive decoder 1544 uses the start of sequence token 1550 ([S]) and the latent vector 1112 (z) as inputs in order to predict the first log key 604 in the sequence. In the last step, autoregressive decoder 1544 uses the sequence [S]S' and z as inputs to predict the end of sequence token 1552 denoted by [*EOS*]. In general, at timestamp *t*, the autoregressive decoder 1544 uses the sequence $[S]k_1 k_2 \ldots k_{t-1}$ and z in order to predict the log key 604 at position *t* denoted by $k_t$. The autoregressive decoder 1544 is composed of transformer-based self-attention and cross-attention heads. The self-attention heads encode the current sequence $[S]k_1 k_2 \ldots k_{t-1}$ to obtain an embedding matrix $E_t$. This embedding matrix captures only the sequential information in the sequence up to the log key 604 at position *t* - 1. To incorporate the latent vector 1112 (*z*) into the decoding process, a transformer-based cross attention head computes both context- and encoder-aware embeddings. Formally, in a given cross-attention head, three parametric matrices are introduced: a query matrix *Q*, a key matrix *K*, and a value matrix *V*. The cross-attention between the embedding matrix $E_t$ and the latent vector 1112 (*z*) is given by:

$$Q = E_t Q$$

$$K = z\, K$$

$$V = z\, V$$

$$Att(E_t, z, Q, K, V) = softmax\left(\frac{Q K^T}{\sqrt{h}}\right) V$$

The key output *K* and value output *V* are computed using the latent vector 1112 (*z*), and the query output *Q* is computed using the embedding matrix $E_t$. The next log key prediction is used to train the autoregressive decoder 1544. Therefore, a language model head is used to predict the probability distributions over the log keys 604 in each timestamp *t* of the augmented log key sequence 1504 (*S'*). Given a ground truth log key $k_t$ at position *t*, the autoregressive decoder 1544 predicts the probability $p(k_t | S'_{1:t-1})$.

There are multiple distributions of log key sequences 608 that are present in the training data 410, including both distributions of normal and corrupted log sequences. The intuition behind the reweighting method is that during the initial epochs 420 of training, the model learns the multimodal distributions of normal samples 514 before starting to overfit on the distributions of corrupted samples 516 (also referred to as noisy samples). To have a more accurate estimation of the ability of the autoregressive decoder 1544 to reconstruct a given pattern from the latent vectors 1112, multiple latent vectors $z_1$, $z_2, \ldots, z_{K-1}$ from a given estimated distribution are used for input reconstruction. In other words, the model's ability to learn a frequent normal pattern is quantified by its ability to reconstruct the original input from multiple generated random variables. The reconstruction loss for a given augmented log key sequence 1504 (*S'*) is given by:

$$R_L(z) = -\sum_{j=1}^{T} \log p(k_j | S'_{1:j-1})$$

*T* is the length of the augmented log key sequence 1504 (S'). The reconstruction loss $R_L$ is computed using *K* - 1 latent vectors $z_1, z_2, \ldots, z_{K-1}$, to obtain the reconstruction losses, $R_L(z_1), R_L(z_2), \ldots, R_L(z_{K-1})$, respectively. The overall ability of the autoregressive decoder 1544 to reconstruct a pattern by the mean aggregation of the reconstruction losses of the individual latent vectors 1112 is estimated as:

$$Mean(R_L) = \frac{\sum_{i=1}^{K-1} R_L(z_i)}{K - 1}$$

The sample weight 507 ($w_{S'}$) of an augmented log key sequence 1504 (S') is the inverse of the mean of reconstruction losses:

$$w_{S'} = \frac{1}{Mean(R_L)}$$

The larger the sample weight 507 ($w_{S'}$), the smaller the mean of the reconstruction losses $Mean(R_L)$, and the better the ability of the autoregressive decoder 1544 to reconstruct the augmented log key sequence 1504 (*S'*) from multiple random variables generated from a given estimated distribution.

The estimated sample weights 507 may be in-batch normalized. Suppose that a given batch is composed of $B$ augmented log key sequences 1504 ($S'$), $S'_1, S'_2, ..., S'_B$ with corresponding estimated sample weights $w_{S'_1}, w_{S'_2}, ..., w_{S'_B}$, respectively. The in-batch normalized sample weight 507 of an augmented log key sequence $1504 (S'_i)$ is given by:

$$NW_{S'_i} = \frac{w_{S'_i}}{\sum_{j=1}^{B} w_{S'_j}}$$

The estimated sample weights 507 are detached from the model parameter update, so they will not be updated with backpropagation to minimize the final weighted loss function.

In VAE 702, the objective function is the variational lower bound of the marginal likelihood of data, which is defined by:

$$\log p(x) \geq E_{z \sim q(Z|x)} \log p(x|z) - KL(q(z|x)||p(z))$$

$KL(Q||P)$ is the Kullback-Leibler divergence between two distributions $Q$ and $P$. The model parameters 418 are optimized by maximizing the evidence lower bound (ELBO), therefore, the loss function $L$ (loss is to be minimized) is defined by:

$$L = KL(q(z|x)||p(z)) - E_{z \sim q(Z|x)} \log p(x|z)$$

The second term of the loss function is the reconstruction loss. For a given augmented log key sequence 1504 ($S'$), this term can be approximated using $R_L(z)$. For a given batch that is composed of $B$ augmented log key sequences 1504 ($S'$) (e.g., $S'_1, S'_2, ..., S'_B$), the loss 1546 of augmented log key sequence $1504 (S'_i)$ is given by:

$$L_{S'_i} = KL(q(z_K|x)||p(z_K)) + R_L(z_K)$$

The final weighted loss function of the proposed model is given by:

$$Loss = \sum_{i=1}^{B} NW_{S'_i} \times L_{S'_i}$$

One technical benefit is the proposed loss function allows the model to focus its training effort on learning the frequent patterns of normal log sequences, while ignoring the infrequent patterns of corrupted log sequences.

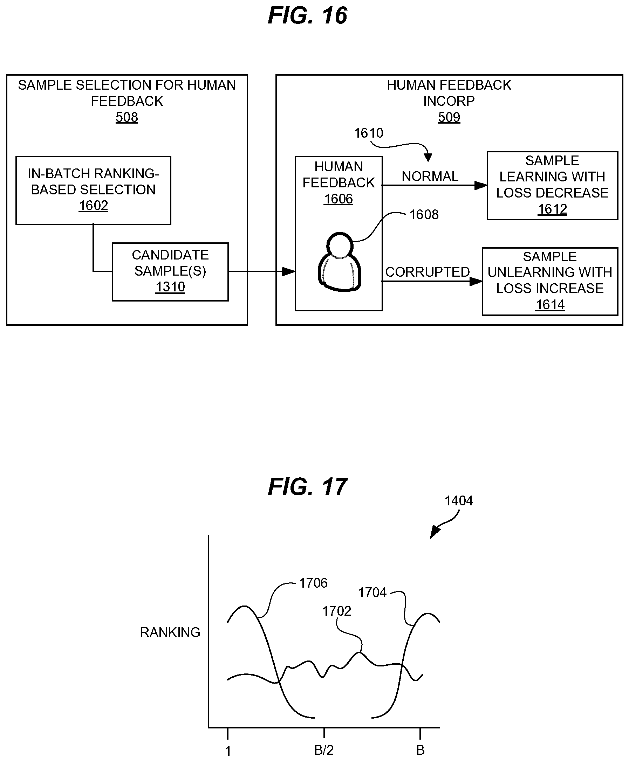

After several epochs 420 of model training with sample weight estimation 506, human feedback may be used to validate specific or selected training samples 412. One technical benefit is this step helps to improve the model's reliability. FIG. 16 is a diagram illustrating validation through human feedback in an illustrative embodiment. ML trainer 312, for example, identifies one or more training samples 412 for human feedback 1606, and the human feedback 1606 is incorporated into the anomaly detection model 416. ML trainer 312 may use an in-batch ranking-based selection 1602 to identify or select one or more candidate samples 1310 for human feedback 1606. During training of the anomaly detection model 416 with sample weight estimation 506 for N epochs, each training sample 412 (i.e., augmented log key sequence 1504 ($S'$)) has a relative ranking r in its batch, which is based on sorting of the sample weights 507 (e.g., in a decreasing order). For a batch size of $B$ training samples 412, the ranking r is in the interval $[1, B]$. ML trainer 312 collects the relative rankings of the training samples 412 in all the N epochs, and obtains a list of rankings $[r_1, r_2, ..., r_N]$.

When the model is trained for a threshold number of epochs 420, a ranking distribution 1404 may be generated for each training sample 412. FIG. 17 is a graph illustrating ranking distributions 1404 of a training sample 412 in an illustrative embodiment. FIG. 17 illustrates three cases based on the relative rankings 1402 of a training sample 412. Curve 1702 represents a training sample 412 with a normal pattern, which has a ranking distribution 1404 that is close to a uniform distribution because similarly occurring normal patterns in the training dataset 410 should be learned equally by the model. Curve 1704 represents a training sample 412 with a corrupted pattern. A corrupted pattern should have a large relative ranking 1402 (i.e., a small sample weight when the sample weights are sorted in a decreasing order) in most of the batches 422 of training, which indicates that the model is not able to learn the current pattern compared to the other patterns in the training dataset 410. Curve 1706 represents a ranking distribution where a training sample 412 is dominating the batch 422 in most of the epochs 420. This may indicate either a very frequent normal pattern or a sample weight estimation error that leads to learning some corrupted patterns. In both cases, the training samples 412 that follow the ranking distribution 1404 of curve 1706 may be selected as candidate samples 1310 for human feedback 1606.

After the sample selection step, ML trainer 312 obtains or requests the human feedback 1606 (i.e., from a human 1608 or human rater) to label the candidate samples 1310, as in FIG. 16. For example, the human feedback 1606 may assign a label 1610 to a candidate sample 1310, such as normal or corrupted. For the candidate samples 1310 labeled as normal, ML trainer 312 may incorporate the labeled candidate sample 1310 into the anomaly detection model 416 by sample learning with loss decrease 1612. For the candidate samples 1310 labeled as corrupted, ML trainer 312 may incorporate the labeled candidate sample 1310 into the anomaly detection model 416 by sample unlearning with loss increase 1614, which forces the anomaly detection model 416 to unlearn this specific corrupted pattern.

ML trainer 312 continues the training process 500 with final training 426 of the anomaly detection model 416 based on the filtered training dataset 414. ML trainer 312 removes, filters, or deletes the corrupted samples 516 from the training dataset 410 to generate the filtered training dataset 414. The filtered training dataset 414 therefore consists (exclusively) of normal samples 514. The corrupted samples 516 were identified by the ranking distribution 1404 of the weight estimation (i.e., curve 1704 in FIG. 17) and/or the human feedback 1606 for the corrupted candidate samples 1310, and removed from the training dataset 410. During final training 426, ML trainer 312 deactivates the data augmentation module 1502 and weight estimation module 1540.

After the final training 426, anomaly detection model 416 may be used in the testing/deployment phase 404 to detect anomalous log sequences. A given log sequence S is fed (e.g., by ML manager 314) to the trained bidirectional encoder 1510 to obtain the embedding of the log sequence S. The mean layer 1524 estimates the mean 1004 ($\mu$) of the mode of the current sample. The mean 1004 ($\mu$) is fed to the autoregressive decoder 1544 to reconstruct the log sequence S. During this reconstruction process, the autoregressive decoder 1544 iteratively predicts the next log key $k_{t+1}$ given the preceding sub-sequence $S_{1:t}$ and the mode's mean 1004 ($\mu$). For each predicted log key 604, the autoregressive decoder 1544 generates a set of Top-K predicted log keys 604, which represents the K most likely log keys 604 at the current position. ML manager 314 compares the actual next log key 604 to the top-K predicted log keys. When one actual log key 604 does not belong to the set of the top-K predicted log keys, the log sequence S is detected as an anomalous log sequence (i.e., an anomaly 132), and ML manager 314 triggers an anomaly notification 134 (e.g., alert 136, alarm 138, etc.).

One technical benefit is a reliable anomaly detection model 416 may be trained even when the original training dataset 410 includes imperfect data. The training method with sample weight estimation automatically identifies corrupted samples 516 in the training dataset 410 in order to obtain a more accurate and reliable anomaly detection model 416. To improve or guarantee the model's reliability, human feedback 1606 is obtained to validate the sample weights 507 for some specific training samples 412. The in-batch ranking-based sample selection identifies training samples 412 that correspond with a sample weight estimation error that leads to learning some corrupted patterns. Therefore, the sample weight estimation reduces human effort for data curation by checking the most important training samples 412 selected using the in-batch ranking-based sample selection. As a result, the time-consuming human effort is not needed for data curation before starting the training. The human feedback is directly incorporated into the anomaly detection model 416. The parameters of the anomaly detection model 416 are updated by sample learning for the identified normal samples 514, and sample unlearning for the identified corrupted samples 516. Final training of the anomaly detection model 416 is performed with the filtered training dataset 414, which may be considered "perfect" for learning normal patterns. Therefore, at the end of the training phase 402, a reliable anomaly detection model 416 is trained and can be used for anomaly detection. This makes it a promising tool for protecting against serious security issues.

Any of the various elements or modules shown in the figures or described herein may be implemented as hardware, software, firmware, or some combination of these. For example, an element may be implemented as dedicated hardware. Dedicated hardware elements may be referred to as "processors", "controllers", or some similar terminology. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, a network processor, application specific integrated circuit (ASIC) or other circuitry, field programmable gate array (FPGA), read only memory (ROM) for storing software, random access memory (RAM), non-volatile storage, logic, or some other physical hardware component or module.

Also, an element may be implemented as instructions executable by a processor or a computer to perform the functions of the element. Some examples of instructions are software, program code, and firmware. The instructions are operational when executed by the processor to direct the processor to perform the functions of the element. The instructions may be stored on storage devices that are readable by the processor. Some examples of the storage devices are digital or solid-state memories, magnetic storage media such as a magnetic disks and magnetic tapes, hard drives, or optically readable digital data storage media.

As used in this application, the term "circuitry" may refer to one or more or all of the following:

(a) hardware-only circuit implementations (such as implementations in only analog and/or digital circuitry);
(b) combinations of hardware circuits and software, such as (as applicable):

(i) a combination of analog and/or digital hardware circuit(s) with software/firmware; and
(ii) any portions of hardware processor(s) with software (including digital signal processor(s)), software, and memory(ies) that work together to cause an apparatus, such as a mobile phone or server, to perform various functions); and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Although specific embodiments were described herein, the scope of the disclosure is not limited to those specific embodiments. The scope of the disclosure is defined by the following claims and any equivalents thereof.

**Claims**

1.   An apparatus, comprising:

at least one processor; and
at least one memory storing instructions that, when executed by the at least one processor, cause the apparatus at least to perform:

initial training of an anomaly detection model based on training samples of a training dataset over multiple epochs, wherein the anomaly detection model comprises a variational autoencoder;
wherein for each training sample of the training samples during an epoch, the initial training comprises:

inputting an original data sequence corresponding with the training sample into an encoder of the variational autoencoder to output a multivariant distribution in latent space;
sampling the multivariant distribution to generate multiple latent vectors;
inputting the latent vectors into a decoder of the variational autoencoder to output reconstructed data sequences; and
computing an estimated sample weight for the training sample representing an accuracy of the decoder reconstructing the original data sequence from the latent vectors based on the reconstructed data sequences;

identifying, after the multiple epochs, one or more corrupted samples from the training dataset based on estimated sample weights computed for the training samples;
removing the one or more corrupted samples from the training dataset to generate a filtered training dataset; and
performing final training of the anomaly detection model based on the training samples of the filtered training dataset.

2.   The apparatus of claim 1, wherein the computing the estimated sample weight comprises:

computing reconstruction losses for the latent vectors;
computing a mean of the reconstruction losses for the latent vectors; and
computing the estimated sample weight for the training sample as an inverse of the mean.

3. The apparatus of claim 2, wherein the computing the estimated sample weight comprises:
normalizing the estimated sample weight for the training sample within a batch of the training samples.

4. The apparatus of claim 1, wherein the identifying one or more corrupted samples from the training dataset comprises:

selecting one or more candidate samples for human feedback based on the estimated sample weights computed for the training samples; and
identifying any of the one or more candidate samples as a corrupted sample when indicated as corrupted based on the human feedback.

5. The apparatus of claim 4, wherein the initial training further comprises:
incorporating the human feedback into the anomaly detection model for at least one of the one or more candidate samples.

6. The apparatus of claim 5, wherein the incorporating the human feedback comprises:
unlearning any of the one or more candidate samples indicated as a corrupted sample based on the human feedback.

7. The apparatus of claim 4, wherein the selecting one or more candidate samples comprises:

determining a relative ranking for each of the training samples within a batch of an epoch by sorting the estimated sample weights in decreasing order;
determining ranking distributions for the training samples within the batch over the multiple epochs based on the relative ranking determined for each of the training samples; and
selecting the one or more candidate samples for human feedback based on the ranking distributions.

8. The apparatus of claim 7, wherein the identifying the one or more corrupted samples comprises:
identifying at least one of the one or more corrupted samples based on the ranking distributions.

9. The apparatus of claim 4, wherein, for each training sample of the training samples during the epoch, the initial training further comprises:
augmenting a data sequence of the training sample to generate an augmented data sequence, wherein the augmented data sequence comprises the original data sequence corresponding with the training sample input into the encoder.

10. The apparatus of claim 1, wherein:

the encoder comprises a transformer-based bidirectional encoder; and
the decoder comprises a transformer-based autoregressive decoder.

11. A method comprising:

performing initial training of an anomaly detection model based on training samples of a training dataset over multiple epochs, wherein the anomaly detection model comprises a variational autoencoder;
wherein for each training sample of the training samples during an epoch, the initial training comprises:

inputting an original data sequence corresponding with the training sample into an encoder of the variational autoencoder to output a multivariant distribution in latent space;
sampling the multivariant distribution to generate multiple latent vectors;
inputting the latent vectors into a decoder of the variational autoencoder to output reconstructed data sequences; and
computing an estimated sample weight for the training sample representing an accuracy of the decoder reconstructing the original data sequence from the latent vectors based on the reconstructed data sequences;

identifying, after the multiple epochs, one or more corrupted samples from the training dataset based on estimated sample weights computed for the training samples;

removing the one or more corrupted samples from the training dataset to generate a filtered training dataset; and

performing final training of the anomaly detection model based on the training samples of the filtered training dataset.

12. The method of claim 11, wherein the computing the estimated sample weight comprises:

computing reconstruction losses for the latent vectors;

computing a mean of the reconstruction losses for the latent vectors; and

computing the estimated sample weight for the training sample as an inverse of the mean.

13. The method of claim 12, wherein the computing the estimated sample weight comprises:

normalizing the estimated sample weight for the training sample within a batch of the training samples.

14. The method of claim 11, wherein the identifying one or more corrupted samples from the training dataset comprises:

selecting one or more candidate samples for human feedback based on the estimated sample weights computed for the training samples; and

identifying any of the one or more candidate samples as a corrupted sample when indicated as corrupted based on the human feedback.

15. The method of claim 14, wherein the initial training further comprises:

incorporating the human feedback into the anomaly detection model for at least one of the one or more candidate samples.

16. The method of claim 15, wherein the incorporating the human feedback comprises:

unlearning any of the one or more candidate samples indicated as a corrupted sample based on the human feedback.

17. The method of claim 14, wherein the selecting one or more candidate samples comprises:

determining a relative ranking for each of the training samples within a batch of an epoch by sorting the estimated sample weights in decreasing order;

determining ranking distributions for the training samples within the batch over the multiple epochs based on the relative ranking determined for each of the training samples; and

selecting the one or more candidate samples for human feedback based on the ranking distributions.

18. The method of claim 17, wherein the identifying the one or more corrupted samples comprises:

identifying at least one of the one or more corrupted samples based on the ranking distributions.

19. The method of claim 14, wherein, for each training sample of the training samples during the epoch, the initial training further comprises:

augmenting a data sequence of the training sample to generate an augmented data sequence, wherein the augmented data sequence comprises the original data sequence corresponding with the training sample input into the encoder.

20. A computer readable medium embodying programmed instructions which, when executed by a processor, are operable for performing a method comprising:

performing initial training of an anomaly detection model based on training samples of a training dataset over multiple epochs, wherein the anomaly detection model comprises a variational autoencoder;

wherein for each training sample of the training samples during an epoch, the initial training comprises:

inputting an original data sequence corresponding with the training sample into an encoder of the variational autoencoder to output a multivariant distribution in latent space;

sampling the multivariant distribution to generate multiple latent vectors;

inputting the latent vectors into a decoder of the variational autoencoder to output reconstructed data sequences; and

computing an estimated sample weight for the training sample representing an accuracy of the decoder reconstructing the original data sequence from the latent vectors based on the reconstructed data sequences;

identifying, after the multiple epochs, one or more corrupted samples from the training dataset based on estimated sample weights computed for the training samples;
removing the one or more corrupted samples from the training dataset to generate a filtered training dataset; and
performing final training of the anomaly detection model based on the training samples of the filtered training dataset.

# FIG. 1

**SYSTEM**
**100**

| SERVICE ELEMENT 102 | SERVICE ELEMENT 102 | SERVICE ELEMENT 102 | SERVICE ELEMENT 102 |
|---|---|---|---|
| LOG FILES 104 | LOG FILES 104 | LOG FILES 104 | LOG FILES 104 |

**ANALYSIS SYSTEM**
**120**

**ANOMALY DETECTION SYSTEM**
**130**

ANOMALY
132

**ANOMALY NOTIFICATION**
**134**

ALERT
136

ALARM
138

# FIG. 2A

LOG FILE
104

LOG DATA
206

LOG LINE
212

| PREAMBLE 214 | LOG MESSAGE 216 |

210

LOG LINE
212

| PREAMBLE 214 | LOG MESSAGE 216 |

210

LOG LINE
212

| PREAMBLE 214 | LOG MESSAGE 216 |

210

.
.
.

LOG MESSAGE
216

| DATA ELEMENT 220 | DATA ELEMENT 220 | DATA ELEMENT 220 | DATA ELEMENT 220 | · · · |

# *FIG. 2B*

204

230

216

Receiving block blk_45 src:/10.251.67.225:38596 dest:/10.251.67.225:50

BLOCK*NameSystem.allocateBlock: /user/root/rand/_task_20_0001_m blk_45

Receiving block blk_45 src:/10.251.67.225:39143 dest:/10.251.67.225:50010

Receiving block blk_45 src:/10.251.26.8:43883 dest:/10.251.26.8:50

PacketResponder 1 for block blk_45 terminating

Received block blk_45 of size 67108864 from /10.251.67.225

232

PacketResponder 0 for block blk_45 terminating

Received block blk_45 of size 67108864 from /10.251.26.8

. . .

TIMELINE

216

## FIG. 3

**ANOMALY DETECTION SYSTEM**
**130**

NETWORK INTERFACE
302

DATA COLLECTOR
304

DATA STORE
308

DATA ANALYZER
306

DATASET
318

ML SYSTEM
310

LOG FILE
104

ML TRAINER
312

ML MODEL
316

ML MANAGER
314

PROCESSOR
330

MEMORY
332

INSTRUCTIONS 334

CLOUD COMPUTING PLATFORM
340

PROCESSING RESOURCES
342

STORAGE RESOURCES
344

NETWORK RESOURCES
346

## FIG. 4

TRAINING PHASE
402

TRAINING DATASET
410

TRAINING SAMPLES
412

INITIAL TRAINING   424

EPOCH
420

BATCH
422

ANOMALY DETECTION MODEL
416

MODEL PARAMETERS
418

FILTERED TRAINING DATASET
414

FINAL TRAINING   426

TESTING/DEPLOYMENT PHASE
404

LOG FILE
104

(TRAINED) ANOMALY DETECTION MODEL
416

ANOMALIES
132

AUTOMATED ACTIONS
430

## FIG. 5

500

**COLLECTION 502**
- LOG FILE 104

→

**LOG PARSING 504**
- LOG PARSER 505

→

**TRAINING DATASET 410**
- **TRAINING SAMPLES 412**
  - NORMAL 514
  - CORRUPT 516

**INITIAL TRAINING 424**
- SAMPLE WEIGHT ESTIMATION 506 → SAMPLE SELECTION FOR HUMAN FEEDBACK 508 → HUMAN FEEDBACK INCORP 509
- SAMPLE WEIGHTS 507 → CORRUPTED SAMPLE IDENTIFICATION 510 → CORRUPTED SAMPLE REMOVAL 511

**FILTERED TRAINING DATASET 414**
- **TRAINING SAMPLES 412**
  - NORMAL 514

→ **FINAL TRAINING 426**

*FIG. 6*

412

608       606       610

602

604

| | | |
|---|---|---|
| k1 | : | Receiving block <:ID:> src: <:IP:> dest: <:IP:> |
| k2 | : | BLOCK*NameSystem.allocateBlock: <:*:> <:ID:> |
| k3 | : | Receiving block <:ID:> src: <:IP:> dest: <:IP:> |
| k3 | : | Receiving block <:ID:> src: <:IP:> dest: <:IP:> |
| k4 | : | PacketResponder <:NUM:> for block <:ID:> <:*:> |
| k5 | : | Received block <:ID:> of size <:NUM:> from <:IP:> |
| k4 | : | PacketResponder <:NUM:> for block <:ID:> <:*:> |
| k5 | : | Received block <:ID:> of size <:NUM:> from <:IP:> |

612

## FIG. 7

416

VARIATIONAL AUTOENCODER (VAE)
702

724

INPUT 722

RECONST'D INPUT
730

734

726

728

ENCODER

LATENT SPACE

DECODER

BIDIRECTIONAL TRANSFORMER
740

AUTOREGRESSIVE TRANSFORMER
742

## FIG. 8A

800

OBTAIN A TRAINING DATASET OF TRAINING SAMPLES — 802

PERFORM INITIAL TRAINING OF ANOMALY DETECTION MODEL BASED ON THE TRAINING SAMPLES — 804

FOR EACH SAMPLE

INPUT ORIGINAL DATA SEQUENCE INTO ENCODER TO OUTPUT MULTIVARIATE DISTRIBUTION IN LATENT SPACE — 806

SAMPLE THE MULTIVARIATE DISTRIBUTION TO GENERATE MULTIPLE LATENT VECTORS — 808

INPUT LATENT VECTORS INTO DECODER TO OUTPUT RECONSTRUCTED DATA SEQUENCES — 810

ESTIMATE SAMPLE WEIGHT FOR TRAINING SAMPLE BASED ON ACCURACY OF RECONSTRUCTING DATA SEQUENCES FROM THE LATENT VECTORS — 812

A

## FIG. 8B

800

A

PERFORM INITIAL TRAINING OF ANOMALY DETECTION MODEL BASED ON THE TRAINING SAMPLES — 804

IDENTIFY CORRUPTED SAMPLE(S) BASED ON SAMPLE WEIGHTS — 814

REMOVE THE CORRUPTED SAMPLE(S) FROM THE TRAINING DATASET TO GENERATE A FILTERED TRAINING DATASET — 816

PERFORM FINAL TRAINING OF ANOMALY DETECTION MODEL BASED ON TRAINING SAMPLES OF THE FILTERED TRAINING DATASET — 818

*FIG. 8C*          800

OBTAIN A TRAINING DATASET OF TRAINING SAMPLES — 802

PERFORM INITIAL TRAINING OF ANOMALY DETECTION MODEL BASED ON THE TRAINING SAMPLES — 804

FOR EACH SAMPLE

AUGMENT TRAINING SAMPLE — 840

INPUT ORIGINAL DATA SEQUENCE INTO ENCODER TO OUTPUT MULTIVARIATE DISTRIBUTION IN LATENT SPACE — 806

SAMPLE THE MULTIVARIATE DISTRIBUTION TO GENERATE MULTIPLE LATENT VECTORS — 808

INPUT LATENT VECTORS INTO DECODER TO OUTPUT RECONSTRUCTED DATA SEQUENCES — 810

ESTIMATE SAMPLE WEIGHT FOR TRAINING SAMPLE BASED ON ACCURACY OF RECONSTRUCTING DATA SEQUENCES FROM THE LATENT VECTORS — 812

A

**FIG. 8D**

812

COMPUTE RECONSTRUCTION LOSSES FOR THE LATENT VECTORS — 842

COMPUTE A MEAN OF THE RECONSTRUCTION LOSSES FOR THE LATENT VECTORS — 844

COMPUTE SAMPLE WEIGHT FOR THE TRAINING SAMPLE AS AN INVERSE OF THE MEAN — 846

NORMALIZE THE SAMPLE WEIGHT FOR THE TRAINING SAMPLE WITHIN A BATCH OF THE TRAINING SAMPLES — 848

## FIG. 8E

800

A

PERFORM INITIAL TRAINING OF ANOMALY DETECTION MODEL BASED ON THE TRAINING SAMPLES — 804

SELECT CANDIDATE SAMPLE(S) FOR HUMAN FEEDBACK BASED ON SAMPLE WEIGHTS — 850

IDENTIFY ANY OF THE CANDIDATE SAMPLES AS CORRUPTED SAMPLES WHEN INDICATED BASED ON THE HUMAN FEEDBACK — 852

INCORPORATE THE HUMAN FEEDBACK INTO THE ANOMALY DETECTION MODEL FOR THE CANDIDATE SAMPLE(S) — 854

PERFORM UNLEARNING OF A CANDIDATE SAMPLE INDICATED AS CORRUPTED — 856

IDENTIFY CORRUPTED SAMPLE(S) BASED ON SAMPLE WEIGHTS — 814

REMOVE THE CORRUPTED SAMPLE(S) FROM THE TRAINING DATASET TO GENERATE A FILTERED TRAINING DATASET — 816

PERFORM FINAL TRAINING OF ANOMALY DETECTION MODEL BASED ON TRAINING SAMPLES OF THE FILTERED TRAINING DATASET — 818

**FIG. 8F**

814

DETERMINE A RELATIVE RANKING FOR EACH OF THE TRAINING SAMPLES WITHIN A BATCH OF AN EPOCH BY SORTING THE SAMPLE WEIGHTS IN DECREASING ORDER — 860

DETERMINE RANKING DISTRIBUTIONS FOR THE TRAINING SAMPLES WITHIN THE BATCH OVER THE MULTIPLE EPOCHS BASED ON THE RELATIVE RANKING FOR EACH OF THE TRAINING SAMPLES — 862

SELECT THE CANDIDATE SAMPLE(S) FOR HUMAN FEEDBACK BASED ON THE RANKING DISTRIBUTIONS — 864

**FIG. 8G**

814

IDENTIFY CORRUPTED SAMPLE(S) BASED ON THE RANKING DISTRIBUTIONS — 866

## FIG. 9

```
┌─────────────────────┐                              ┌─────────────────────┐
│  TRAINING SAMPLE    │                              │  AUGMENTED SAMPLE   │
│        412          │                              │        912          │
│  ┌───────────────┐  │     ┌──────────────┐         │  ┌───────────────┐  │
│  │               │  │     │   SEQUENCE   │         │  │   AUGMENTED   │  │
│  │     DATA      │──┼────▶│ AUGMENTATION │────────▶│  │     DATA      │  │
│  │   SEQUENCE    │  │     │     902      │         │  │   SEQUENCE    │  │
│  │     610       │  │     └──────────────┘         │  │     910       │  │
│  │               │  │                              │  │               │  │
│  └───────────────┘  │                              │  └───────────────┘  │
└─────────────────────┘                              └─────────────────────┘
```

## FIG. 10

```
                                              1002              724
                                               │                 │
                                               ▼                 ▼
┌──────────────┐          ╱│        ┌──────────┐      ┌────────────────┐ 734
│              │         ╱ │        │   MEAN   │      │                │  │
│ ORIGINAL DATA│        ╱  │        │   1004   │      │        ▁▃▇▇▃▁    │
│   SEQUENCE   │──────▶ │ 726│──────┤          ├─────▶│      ╱│▏▎▍▌▌▎▏│╲  │
│    1010      │        ╲  │        │   VAR    │      │    ╱  └──────┘  ╲│
│              │         ╲ │        │   1006   │      │                │
└──────────────┘          ╲│        └──────────┘      └────────────────┘
                       ENCODER
```

## FIG. 11

## FIG. 12

# FIG. 13A

TRAINING DATASET
410

412

507

| SAMPLE | SAMPLE | SAMPLE | SAMPLE | SAMPLE | SAMPLE | · · · |
|--------|--------|--------|--------|--------|--------|-------|
| WGT | WGT | WGT | WGT | WGT | WGT | |
| SAMPLE | SAMPLE | SAMPLE | SAMPLE | SAMPLE | SAMPLE | · · · |
| WGT | WGT | WGT | WGT | WGT | WGT | |
| SAMPLE | SAMPLE | SAMPLE | SAMPLE | SAMPLE | SAMPLE | · · · |
| WGT | WGT | WGT | WGT | WGT | WGT | |
| SAMPLE | SAMPLE | SAMPLE | SAMPLE | SAMPLE | SAMPLE | · · · |
| WGT | WGT | WGT | WGT | WGT | WGT | |
| SAMPLE | SAMPLE | SAMPLE | SAMPLE | SAMPLE | SAMPLE | · · · |
| WGT | WGT | WGT | WGT | WGT | WGT | |
| SAMPLE | SAMPLE | SAMPLE | SAMPLE | SAMPLE | SAMPLE | · · · |
| WGT | WGT | WGT | WGT | WGT | WGT | |
| SAMPLE | SAMPLE | SAMPLE | SAMPLE | SAMPLE | SAMPLE | · · · |
| WGT | WGT | WGT | WGT | WGT | WGT | |
| SAMPLE | SAMPLE | SAMPLE | SAMPLE | SAMPLE | SAMPLE | · · · |
| WGT | WGT | WGT | WGT | WGT | WGT | |

·
·
·

# FIG. 13B

## FIG. 14

EPOCH
420

BATCH
422

1402

RANKING          507          412

| RANKING | WGT | SAMPLE |
|---------|-----|--------|
| 1 | WGT | SAMPLE |
| 2 | WGT | SAMPLE |
| 3 | WGT | SAMPLE |
| 4 | WGT | SAMPLE |
| 5 | WGT | SAMPLE |
| 6 | WGT | SAMPLE |
| 7 | WGT | SAMPLE |
| 8 | WGT | SAMPLE |

DECREASING
ORDER

BATCH
422

507          412          1404

| WGT | SAMPLE | RANKING DISTRIBUTION |
|-----|--------|---------------------|
| WGT | SAMPLE | RANKING DISTRIBUTION |
| WGT | SAMPLE | RANKING DISTRIBUTION |
| WGT | SAMPLE | RANKING DISTRIBUTION |
| WGT | SAMPLE | RANKING DISTRIBUTION |
| WGT | SAMPLE | RANKING DISTRIBUTION |
| WGT | SAMPLE | RANKING DISTRIBUTION |
| WGT | SAMPLE | RANKING DISTRIBUTION |
| WGT | SAMPLE | RANKING DISTRIBUTION |

## FIG. 15

# FIG. 16

| SAMPLE SELECTION FOR HUMAN FEEDBACK 508 | HUMAN FEEDBACK INCORP 509 |
|---|---|

IN-BATCH RANKING-BASED SELECTION 1602

CANDIDATE SAMPLE(S) 1310

1610

HUMAN FEEDBACK 1606

1608

NORMAL → SAMPLE LEARNING WITH LOSS DECREASE 1612

CORRUPTED → SAMPLE UNLEARNING WITH LOSS INCREASE 1614

# FIG. 17

1404

1706
1704
1702

RANKING

1          B/2          B

Europäisches
Patentamt

European
Patent Office

Office européen
des brevets

# EUROPEAN SEARCH REPORT

**Application Number**

EP 25 18 0432

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHEN XUANHAO ET AL: "Adversarial Autoencoder for Unsupervised Time Series Anomaly Detection and Interpretation", PROCEEDINGS OF THE 20TH ACM CONFERENCE ON EMBEDDED NETWORKED SENSOR SYSTEMS, ACMPUB27, NEW YORK, NY, USA, 27 February 2023 (2023-02-27), pages 267-275, XP059949385, DOI: 10.1145/3539597.3570371 ISBN: 979-8-4007-0014-9 * abstract * * Secionts 2-6; figures 1, 2 * | 1-20 | INV. G06N3/0455 G06N3/047 |
| A | XUEYING DING ET AL: "From Explanation to Action: An End-to-End Human-in-the-loop Framework for Anomaly Reasoning and Management", ARXIV.ORG, CORNELL UNIVERSITY LIBRARY, 201 OLIN LIBRARY CORNELL UNIVERSITY ITHACA, NY 14853, 6 April 2023 (2023-04-06), XP091478763, * abstract * * Sections 1, 2, 3 and 5; figure 1 * | 1-20 | TECHNICAL FIELDS SEARCHED (IPC) G06N |

The present search report has been drawn up for all claims

| Place of search | Date of completion of the search | Examiner |
|---|---|---|
| The Hague | 10 October 2025 | Malatesta, Lori |

EPO FORM 1503 03.82 (P04C01)